# EUROPÄISCHE PATENTSCHRIFT

(11) **EP 0 890 826 B1**
(45) Veröffentlichungstag und Bekanntmachung des Hinweises auf die Patenterteilung: **25.11.2009**
(21) Anmeldenummer: 98250248.6
(22) Anmeldetag: 08.07.1998
(51) Int. Cl.: G01F 1/66

(54) **Ultraschall-Durchflussmesser mit Messeinsatz aus Kunststoff**
Ultrasonic flowmeter mit metering insert made of plastic
Débimètre à ultrasons comprenant un cadre de mesure en plastique

(30) Priorität: 10.07.1997 DE 19729473
(43) Veröffentlichungstag der Anmeldung: 13.01.1999
(73) Patentinhaber: M & FC Holding LLC, Raleigh, NC 27 615 (US)
(72) Erfinder: Henning, Bremer, 30890 Barsinghausen (DE)
(74) Vertreter: Seewald, Jürgen

(56) Entgegenhaltungen:
- EP-A- 0 477 418
- EP-A- 0 477 419
- EP-A1- 0 559 938
- DE-A1- 4 437 588

## Beschreibung

In der Durchflußmeßtechnik, z.B. auf dem Gebiet der Wasserzähler, gewinnen Durchflußmesser, die nach dem Ultraschallprinzip arbeiten, zunehmend an Bedeutung.

Bei einem bekannten Ultraschall-Durchflußmesser, der nach dem Laufzeitprinzip arbeitet, sind in einem Meßrohr, das in eine Rohrleitung eingefügt wird, zwei in Strömungsrichtung versetzte Ultraschallwandler angeordnet. Die Ultraschallwandler liegen einander auf einer gemeinsamen Achse gegenüber und senden bzw. empfangen impulsförmige Ultraschallsignale stromauf- und stromabwärts, wobei die Ultraschallsignale auf dem direkten Weg vom Sender- zum Empfangswandler gelangen. Aufgrund der überlagerung von Schallgeschwindigkeit und Strömungsgeschwindigkeit unterscheiden sich die zugehörigen Laufzeiten. Dieser Unterschied wird zur Messung des Volumenstroms ausgewertet.

Es ist ein weiterer Ultraschall-Durchflußmesser bekannt (Siemens, ausgestellt auf der "Achema" 1997), bei dem der Ultraschallstrahl nicht auf direktem Weg vom Sende- zum Empfangswandler geschickt wird, sondern am Boden des Meßrohrs durch speziell geformte Reflektoren zu den Seitenwänden des quadratischen Meßrohres hin abgelenkt bzw. von dort zum Empfangswandler zurückgeleitet wird. Das Meßrohr ist dabei als Gehäuse ausgebildet, das an seinen beiden Enden mit Flanschen versehen ist und so in eine Rohrleitung eingefügt werden kann. Das Gehäuse ist mit einem abschraubbaren Deckel versehen, an dem die Ultraschallwandler angebracht sind. Die Reflektoren sind in die Innenwand des aus Metall bestehenden Gehäuses durch Spanung eingearbeitet. Der Ablenkwinkel der Reflektoren ist so gewählt, daß jeweils eine Reflexion an jeder Meßrohrwand erfolgt. Auf diese Weise entsteht ein wendelförmiger Weg für die Ultraschallenergie, der den gesamten Meßrohrquerschnitt überstreicht. Hierdurch ergibt sich der Vorteil einer gleichmäßigeren Durchschallung des Strömungsquerschnitts, und damit eine höhere Meßgenauigkeit.

Diesen bekannten Ultraschall-Durchflußmessern ist der Nachteil gemeinsam, daß bei beglaubigten Meßgeräten immer das komplette Meßgerät mit seinen Flanschen aus dem Rohrleitungssystem für die Durchführung einer Eichung ausgebaut werden muß, wobei für den zuletzt erwähnten Durchflußmesser mit wendelförmiger Führung der Ultraschallenergie noch der Nachteil der kostenaufwendigen spanenden Herstellung der Reflektorflächen hinzukommt.

Aus der EP 0 477 418 A1 ist ein Ultraschall-Durchflußmesser offenbart, der als Einbaueinheit zum Einbauen in ein Meßrohr, insbesondere zur Luftmassenmessung in einem Kraftfahrzeugmotor konzipiert ist. Dieser Durchflußmesser besitzt eine Träger- und Montageplatte, an der zwei Ultraschallwandler angeordnet sind, die abwechselnd als Sendewandler oder Empfangswandler arbeiten. Weiterhin trägt die Montageplatte eine Haltekonstruktion für Reflektoren, die bei eingebautem Durchflußmesser im Abstand von der Montageplatte angeordnet sind und so im Zusammenwirken mit den Ultraschallwandlern einen das Meßrohr durchlaufenden Reflexionsweg für die Ultraschallwellen bilden. In einer Ausführungsform dieses bekannten Ultraschall-Durchflußmessers besteht die Haltekonstruktion aus einer in Durchflußrichtung offenen, wannenartigen Blechkonstruktion, wobei die Reflektoren auf dem Boden dieser wannenförmigen Blechkonstruktion angeordnet sind.

Der beschriebene Ultraschall-Durchflußmesser ist in ein Meßrohr einbaubar, welches entweder schon eine entsprechende Aufnahmeöffnung besitzt, oder aber das nachträglich mit einer solchen Aufnahmeöffnung versehen werden kann. Wenn der Ultraschall-Durchflußmesser in das Meßrohr eingebaut ist, verschließt die Träger- und Montageplatte die Aufnahmeöffnung.

Die oben beschriebene Einbaueinheit könnte, obwohl in der EP 0 477 418 A1 zu ihrer Beglaubigungsfähigkeit und auch dazu, wie die Träger- und Montageplatte mit dem Meßrohr verbunden ist, z. B. durch Verschweißen, keine Aussagen zu finden sind, aus dem Meßrohr ausgebaut und gegen eine geeichte Einbaueinheit ausgetauscht werden.

Weitere, nach dem Laufzeitprinzip arbeitende, Ultraschall-Durchflußmesser sind aus EP 0 477 419 A1, DE 4 437 588 und EP 0 559 938 A1 bekannt.

Aufgabe der vorliegenden Erfindung ist es, eine einfache Lösung für die Beglaubigungsfähigkeit der Meßvorrichtung zur Verfügung zu stellen, die einen kompletten Ausbau des Zählers für das Nacheichen entbehrlich macht, und die sich durch niedrige Herstellungskosten auszeichnet.

Die gestellte Aufgabe wird durch einen Ultraschall-Durchflußmesser gelöst, der die Merkmale des unabhängigen Anspruchs 1 aufweist.

Der wannenförmige Einsatz eines erfindungsgemäßen Ultraschall-Durchflußmessers sitzt in einer dazu passenden Tasche in dem Gehäuse und ist aus Kunststoff gefertigt. Die Mittel zur Umlenkung der Schallenergie lassen sich in kostensparender Weise durch vorgeformte Taschen in dem Einsatz anbringen, in die Ultraschall reflektierende Scheiben, vorzugsweise aus Metall, eingesteckt werden. Die Taschen können bei der Herstellung des Einsatzes mit einer hohen Genauigkeit in der Form vorgesehen werden, so daß bei der Herstellung Einsätze mit in Lage und Abmessungen reproduzierbar genauen Taschen entstehen. Im Gegensatz dazu muß bei spanender Herstellung der Reflexionsflächen in einem Metallgehäuse bzw. bei einer entsprechenden Bearbeitung von Blechoberflächen jedes Mal eine exakte Bearbeitung erfolgen.

In Ausgestaltung der Erfindung ist der Einsatz in seinem oben offenen Ende mit dem Deckel abdichtend verschraubt, der seinerseits mit dem Gehäuse verschraubt ist.

Vorzugsweise ist zwischen dem Einsatz und dem Gehäuse nur eine in Strömungsrichtung stromaufwärts angeordnete Dichtung vorgesehen. Durch die fehlende stromabwärtige Dichtung wird dafür gesorgt, daß zwischen Einsatz und Gehäuse kein Druckunterschied entstehen kann, der zu einer Verbiegung des Kunststoffgehäuses, und damit zu einer falschen Ausrichtung der Reflektorscheiben führen kann.

Die Erfindung wird nachfolgend unter Bezugnahme auf die beigefügten Zeichnungen näher erläutert. In den Zeichnungen stellen dar:

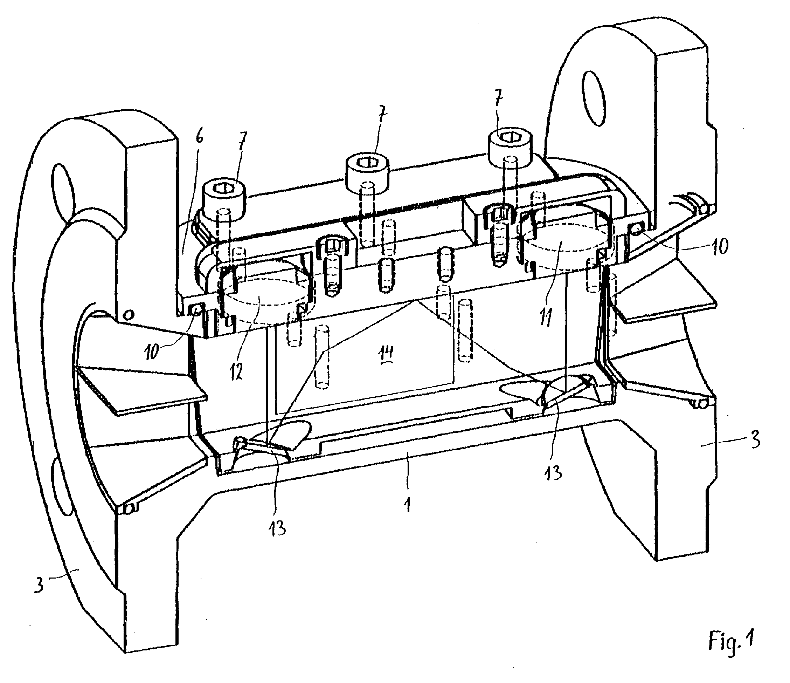

- Fig. 1: eine teilweise geschnittene perspektivische Ansicht eines erfindungsgemäßen Ultraschall-Durchflußmessers im zusammengebauten Zustand;

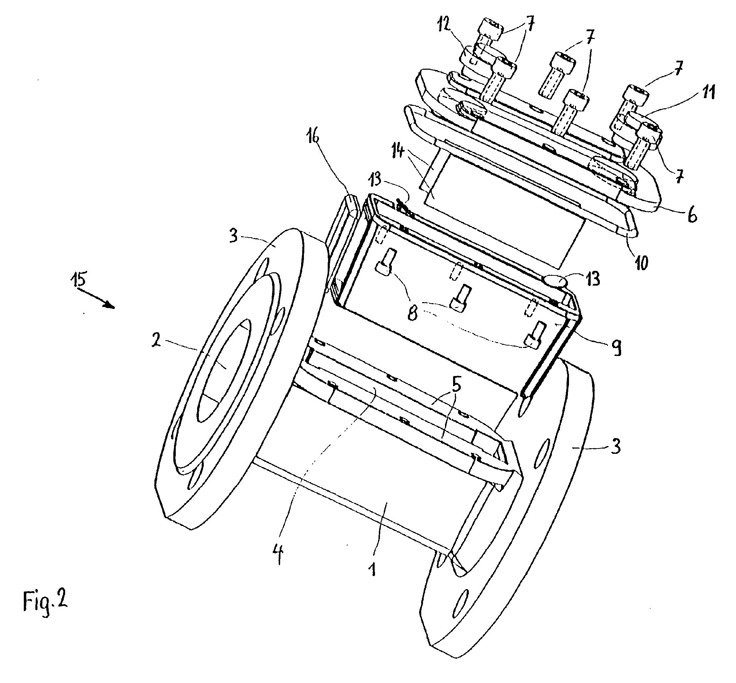

- Fig. 2: eine Seitenansicht des Durchflußmessers von Fig. 1 in Form einer Explosionsdarstellung; und

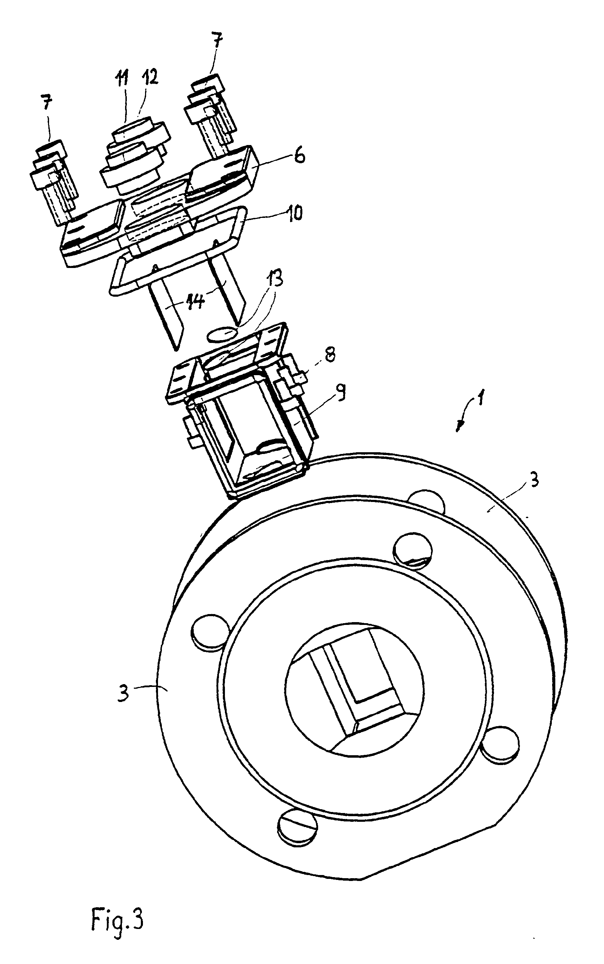

- Fig. 3: eine Stirnansicht des Durchflußmessers von Fig. 1 in Form einer perspektivischen Explosionsdarstellung.

Der in den Zeichnungen dargestellte Ultraschall-Durchflußmesser enthält ein Gehäuse 1, das mit einem Durchflußweg 2 versehen ist und das an seinen beiden Enden je einen Flansch 3 aufweist, die bei Einfügung des Gehäuses 1 in ein nicht dargestelltes Rohrleitungssystem mit entsprechenden Gegenflanschen verschraubt werden können. Das Gehäuse 1 besitzt zwischen den Flanschen 3 eine Kopföffnung und bildet eine Tasche 4, die an ihrem oberen Ende nach außen weisende Flansche 5 besitzt, an denen ein Deckel 6 mit Schrauben 7 angeschraubt werden kann. Am Deckel 6 ist mittels Schrauben 8 ein Einsatz 9 unter Zwischenfügung einer Dichtung 10 angeschraubt. Der Einsatz ist so dimensioniert, daß er in die Tasche 4 paßt.

Im Deckel 6 sind zwei Ultraschallwandler 11 und 12 im Abstand voneinander so angebracht, daß sie ihre Strahlung in den Einsatz 9 hinein richten und aus diesem wieder empfangen. Dabei wird die Ultraschallenergie in dem Einsatz 9 durch reflektierende Flächen wendelförmig in dem Durchflußweg umgelenkt. Für die Umlenkung sorgen zwei am Boden des Einsatzes 9 angebrachte Reflexionsflächen 13, zwei an den Seitenflächen des Einsatzes 9 vorgesehene Reflexionsflächen 14 sowie eine weitere am Deckel 6 des Einsatzes befestigte, nicht sichtbare Reflexionsfläche. Der Einsatz 9 besteht aus Kunststoff, wobei die Reflexionsflächen 13, 14 vorzugsweise in Form von Metallspiegeln in schräge Taschen eingeschoben sind, die bei der Herstellung des Einsatzes mit hoher Genauigkeit ausgeformt werden. Eine kostenaufwendige spanende Bearbeitung zur Herstellung der Reflexionsspiegel entfällt somit.

In Strömungsrichtung 15 ist zwischen dem Durchflußweg des Einsatzes 9 und dem Gehäuse 1 nur eine einzige Dichtung 16 an dem stromaufwärtigen Ende des Meßeinsatzes 9 zum Gehäuse 1 vorgesehen. Hierdurch wird dafür gesorgt, daß keine Flüssigkeit an dem Einsatz 9 vorbeifließen kann, daß jedoch wegen der fehlenden Dichtung am stromabwärtigen Ende das durchfließende Medium in den durch Toleranzen vorhandenen Zwischenraum zwischen Einsatz 9 und Gehäuse 1 einströmen kann, so daß zwischen dem Einsatz 9 und dem Gehäuse 1 kein Druckunterschied entstehen kann, der zu einer Verformung des Kunststoff-Meßeinsatzes führen und damit die Position der Reflexionsflächen verändern könnte.

Der ebenfalls aus Kunststoff bestehende Deckel 6 bildet mit dem Einsatz 9 eine Einheit, die für Eichzwecke durch Lösen der Schrauben 7 vom Gehäuse 1 abgenommem werden kann, so daß sofort eine bereits geeichte Einheit wieder eingesetzt werden kann, ohne daß der gesamte Durchflußmesser aus dem Rohrleitungssystem ausgebaut werden muß. Die Einheit kann dann getrennt vom Gehäuse beglaubigt werden.

## Patentansprüche

1. Ultraschall-Durchflußmesser für Flüssigkeiten nach dem Laufzeitprinzip, bestehend aus einem an seinen beiden Enden mit Flanschen (3) versehenen, in ein Rohrleitungssystem einfügbaren, mit einem aufschraubbaren Deckel (6) versehenen Gehäuse (1) zur Aufnahme der Meßanordnung, die am Deckel (6) angebrachte Ultraschallwandler (11, 12), Mittel zur mehrfachen Umlenkung der Ultraschallenergie vom Ultraschall-Sender (11, 12) zum Ultraschall-Empfänger (12, 11) in dem Durchflußweg des Gehäuses (1) und die zugehörige Elektronik umfaßt, wobei in dem Durchflußweg (2) des Gehäuses (1) ein wannenförmiger, herausnehmbarer Einsatz (9) aus Kunststoff in einer dazu passenden Tasche (4) in dem Gehäuse (1) sitzt, der mit dem Deckel (6) eine Einheit bildet, die die gesamte Meßanordnung beinhaltet und Mittel zur Umlenkung der Ultraschallenergie aus Ultraschall reflektierenden Scheiben (13) aufweist, die in vorgeformte Taschen des Einsatzes (9) eingesteckt sind.

2. Durchflußmesser nach Anspruch 1, **dadurch gekennzeichnet, daß** der Einsatz (9) an seinem oben offenen Ende mit dem Deckel (6) abdichtend verschraubt ist, der seinerseits mit dem Gehäuse (1) verschraubt ist.

3. Durchflußmesser nach Anspruch 1 oder 2, **dadurch gekennzeichnet, daß** zwischen dem Einsatz (9) und dem Gehäuse (1) nur eine in Strömungsrichtung (15) stromaufwärts angeordnete Dichtung (17) vorgesehen ist.

## Claims

1. Ultrasonic flowmeter for fluids according to the transit time principle, consisting of a housing (1), which is provided at its two ends with flanges (3), can be fitted into a pipeline system and is provided with a screw-on cover (6), for accommodating the metering arrangement, which comprises ultrasonic transducers (11, 12) fitted to the cover (6), means for repeated deflection of the ultrasonic energy from the ultrasonic transmitter (11, 12) to the ultrasonic receiver (12, 11) in the flow path of the housing (1), and the associated electronics, wherein a trough-shaped, removable insert (9) of plastics material is mounted in a matching pocket (4) in the housing (1) in the flow path (2) of the housing (1), which insert forms with the cover (6) a unit which contains the entire metering arrangement and has means for deflecting the ultrasonic energy from discs (13) which reflect ultrasound and are inserted in preshaped pockets of the insert (9).

2. Flowmeter according to Claim 1, **characterised in that** the insert (9) is screwed in a sealing manner at its top open end to the cover (6), which in turn is screwed to the housing (1).

3. Flowmeter according to Claim 1 or 2, **characterised in that** just one seal (17), which is disposed upstream in the direction of flow (15), is provided between the insert (9) and the housing (1).

## Revendications

1. Débitmètre à ultrasons pour liquides selon le principe du temps d'écoulement constitué d'un boîtier (1), qui peut être inséré dans un système de tuyauterie et qui est pourvu de collerettes (3) à ses deux extrémités, ainsi que d'un couvercle à vis (6), boîtier, qui est destiné à recevoir le dispositif de mesure comprenant des convertisseurs ultrason (11, 12) fixés sur le couvercle (6), des moyens pour le renvoi multiple de l'énergie ultrason depuis l'émetteur d'ultrasons (11, 12) au récepteur d'ultrasons (12, 11) dans la voie d'écoulement du boîtier (1) et l'équipement électronique associé, dans la voie d'écoulement (2) du boîtier (1), un insert (9) amovible en matière artificielle en forme de cuve étant disposé dans une poche (4) adaptée dans le boîtier (1), insert, qui forme, avec le couvercle (6), une unité comprenant l'ensemble du dispositif de mesure et des moyens de renvoi de l'énergie ultrason constitués de plaques de renvoi de l'énergie ultrason (13), qui sont insérées dans des poches préformées de l'insert (9).

2. Débitmètre selon la revendication 1, **caractérisé en ce qu'**au niveau de son extrémité ouverte en haut, l'insert (9) est vissé au couvercle (6) de manière étanche, couvercle (6) qui, de son côté, est vissé au boîtier (1).

3. Débitmètre selon la revendication 1 ou 2, **caractérisé en ce qu'**entre l'insert (9) et le boîtier (1), est prévue une seule garniture d'étanchéité (17), disposée en amont dans le sens d'écoulement (15).
